(19) Europäisches Patentamt
European Patent Office
Office européen des brevets

(11) EP 4 718 541 A1

(12) EUROPEAN PATENT APPLICATION

(43) Date of publication:
**01.04.2026 Bulletin 2026/14**

(21) Application number: **25201402.2**

(22) Date of filing: **10.09.2025**

(51) International Patent Classification (IPC):
***H01M 4/62*** *(2006.01)* ***C01B 32/174*** *(2017.01)*

(52) Cooperative Patent Classification (CPC):
**H01M 4/622; C01B 32/174; H01M 4/625**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.09.2024 KR 20240130054**

(71) Applicant: **SK Innovation Co., Ltd.**
**Seoul 03188 (KR)**

(72) Inventors:
- **JEON, Hyun Ji**
  **34124 Daejeon (KR)**
- **CHUNG, Hyun Suk**
  **34124 Daejeon (KR)**
- **KIM, Soo Bean**
  **34124 Daejeon (KR)**
- **SHIN, Sang Hye**
  **34124 Daejeon (KR)**
- **LEE, Yong Hoon**
  **34124 Daejeon (KR)**
- **HAN, Yong Bin**
  **34124 Daejeon (KR)**

(74) Representative: **Prüfer & Partner mbB**
**Patentanwälte · Rechtsanwälte**
**Sohnckestraße 12**
**81479 München (DE)**

# (54) CONDUCTIVE MATERIAL DISPERSION LIQUID, ELECTRODE SLURRY INCLUDING THE SAME, AND LITHIUM SECONDARY BATTERY INCLUDING THE SAME

(57) A conductive material dispersion liquid according to embodiments of the present disclosure includes a conductive material including carbon nanotubes; a first dispersant including a cellulose polymer; and a second dispersant including a polyethylene oxide polymer. The dispersibility of a conductive material dispersion liquid including both the first dispersant and the second dispersant may be improved, and resistance characteristics of a secondary battery may be improved.

[FIG. 1]

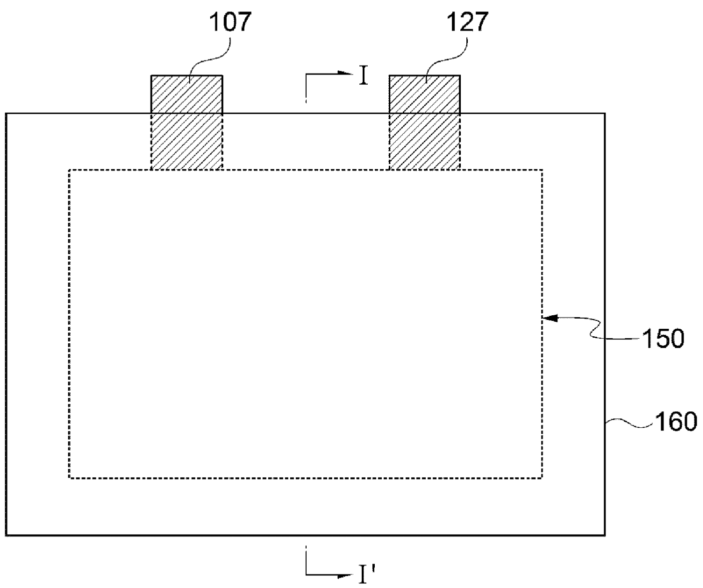


EP 4 718 541 A1

## Description

[BACKGROUND OF THE INVENTION]

1. Field of the Invention

The present disclosure relates to a conductive material dispersion liquid, an electrode slurry including the same, and a secondary battery.

2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as a hybrid vehicle as a power source thereof.

Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

An electrode for a secondary battery may include a conductive material, and the conductive material may provide conductivity between electrode active material particles and reduce a resistance in the electrode. As the conductive material, a point-like conductive material such as carbon black and/or a linear conductive material such as carbon nanotubes may be used. For example, an electrode slurry may be prepared by mixing the electrode active material particles and the conductive material, and the electrode (or the electrode active material layer of the electrode, respectively) for a secondary battery may be prepared from the electrode slurry.

However, a conductive material which is not uniformly dispersed may intensify an aggregation phenomenon between the electrode active material particles in the electrode slurry, thereby reducing the conductivity of the electrode. In addition, as the viscosity of the electrode slurry is increased, the time required to manufacture the electrode is increased, thereby causing a decrease in the process efficiency. Therefore, research and development for increasing the dispersibility of the conductive material are required.

[SUMMARY OF THE INVENTION]

An object of the present disclosure is to provide a conductive material dispersion liquid having improved dispersibility.

Another object of the present disclosure is to provide an electrode slurry having improved dispersibility.

In addition, another object of the present disclosure is to provide a lithium secondary battery having improved electrochemical characteristics.

To achieve the above objects, according to an aspect of the present disclosure, there is provided a conductive material dispersion liquid including: a conductive material including carbon nanotubes; a first dispersant including a cellulose polymer; and a second dispersant including a polyethylene oxide polymer. The conductive material dispersion liquid may be suitable for being used in a secondary battery, such as a lithium secondary battery.

According to exemplary embodiments, a content of the conductive material may be 0.2% by weight to 8.0% by weight based on a total weight of the conductive material dispersion liquid.

According to exemplary embodiments, a content of the first dispersant may be 50% by weight to 400% by weight based on 100% by weight of the conductive material.

According to exemplary embodiments, a content of the second dispersant may be 10% by weight to 100% by weight based on 100% by weight of the conductive material.

According to exemplary embodiments, a weight ratio of the second dispersant to the first dispersant may be 0.05 to 0.5.

According to exemplary embodiments, the first dispersant may have a weight average molecular weight (MW) of 75,000 to 400,000.

According to exemplary embodiments, an average value of the number of hydroxyl groups substituted by an alkyl group or an acyl group among three hydroxyl groups per glucose unit of the cellulose polymer in the first dispersant may be 0.5 to 1.0.

According to exemplary embodiments, the second dispersant may include a polyethylene oxide, or a copolymer of polyethylene oxide and polypropylene oxide.

According to exemplary embodiments, the second dispersant may include an ethylene oxide repeating unit and a repeating unit represented by Formula 1 below:

[Formula 1]

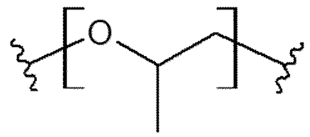

According to exemplary embodiments, the second dispersant may include one or more of polymers represented by Formulas 2 to 4 below:

[Formula 2]

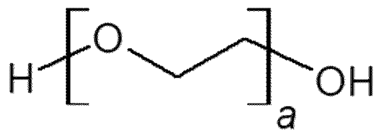

[Formula 3]

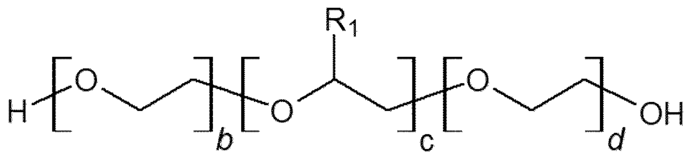

[Formula 4]

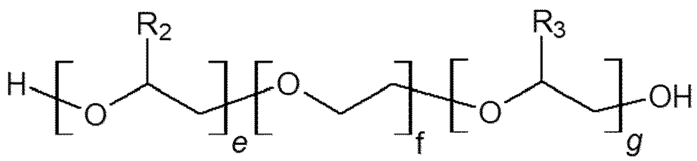

In Formula 2, a is an integer of 5 to 500. In Formula 3, $R_1$ is a $C_1$ to $C_5$ alkyl group or a $C_1$ to $C_5$ alkenyl group, and b, c and d are each an integer of 5 to 150. In Formula 4, $R_2$ and $R_3$ are each independently a $C_1$ to $C_5$ alkyl group or a $C_1$ to $C_5$ alkenyl group, and e, f and g are each an integer of 5 to 150.

According to exemplary embodiments, the second dispersant may have a weight average molecular weight (MW) of 500 to 30,000.

According to exemplary embodiments, the conductive material dispersion liquid may have a viscosity change rate of 15% or less.

According to exemplary embodiments, the conductive material dispersion liquid may further include an aqueous solvent.

According to another aspect of the present disclosure, there is provided an electrode slurry including the conductive material dispersion liquid according to the above-described embodiments. According to exemplary embodiments, the electrode slurry includes the conductive material dispersion liquid according to the above-described embodiments and anode active material. According to exemplary embodiments, the electrode slurry includes the conductive material dispersion liquid according to the above-described embodiments and cathode active material. According to exemplary embodiments, the electrode slurry includes the conductive material dispersion liquid according to the above-described embodiments, an anode active material or a cathode active material, and binder, such as a first binder and a second binder.

According to exemplary embodiments, the conductive material includes or consists of carbon nanotubes, wherein the carbon nanotubes may be single-walled carbon nanotubes (SWCNTs). Optionally, the carbon nanotubes may have an average length of 0.1 μm to 500 μm or 1 μm to 10 μm, and/or may have an outer diameter of 1 nm to 15 nm or 1 nm to 10 nm, and/or may have an inner diameter of 0.1 nm to 5 nm or 0.3 nm to 4 nm.

The present disclosure further provides a use of the conductive material dispersion liquid, which is defined by including: a conductive material; a first dispersant including a cellulose polymer; and a second dispersant including a polyethylene oxide polymer. The dispersibility of this combination of a first cellulose polymer dispersant and a second polyethylene oxide polymer dispersant is particular effective to disperse, and to reduce agglomeration, of micron-sized and/or nano-sized particles in the liquid, which particles may form the conductive material and/or further active material. It is therefore particularly useful for including carbon nanotubes for producing an electrode, optionally for producing an electrode of a lithium secondary battery, and/or for producing a lithium secondary battery.

In addition, according to another aspect of the present disclosure, there is provided a lithium secondary battery including: an electrode for a lithium secondary battery which includes an electrode active material layer formed from the electrode slurry according to the above-described embodiments; and a counter electrode disposed to face the electrode for a lithium secondary battery.

According to embodiments of the present disclosure, the conductive material dispersion liquid includes, besides a conductive material, the first dispersant including a cellulose polymer and the second dispersant including a polyethylene oxide polymer. The dispersibility of the conductive material dispersion liquid may be improved by the first dispersant and the second dispersant, and an electrode having a low surface resistance may be formed. In addition, aggregation of the conductive materials may be suppressed by the dispersant, such that the storage stability may be improved.

According to exemplary embodiments, the contents of the first dispersant and the second dispersant may be adjusted within a predetermined range. Thereby, the dispersibility and storage stability of the conductive material dispersion liquid may be further improved.

[BRIEF DESCRIPTION OF THE DRAWINGS]

The above and other objects, features and other advantages of the present disclosure will be more clearly understood from the following detailed description taken in conjunction with the accompanying drawings, in which:

FIGS. 1 and 2 are a schematic plan view and a cross-sectional view illustrating a lithium secondary battery according to exemplary embodiments, respectively.

[DETAILED DESCRIPTION OF THE INVENTION]

According to embodiments of the present disclosure, a conductive material dispersion liquid including a conductive material and dispersants is provided. According to embodiments of the present disclosure, an electrode slurry including the conductive material dispersion liquid is provided. According to embodiments of the present disclosure, a lithium secondary battery including an electrode active material layer formed by the above-described electrode slurry is provided.

The lithium secondary battery according to the embodiments of the present disclosure may be widely applied to green technology fields such as an electric vehicle, and a battery charging station, as well as other solar power generation and wind power generation using the batteries. In addition, the lithium secondary battery according to the embodiments of the present disclosure may be used in an eco-friendly electric vehicle, and a hybrid vehicle, etc., which are intended to prevent climate change by suppressing air pollution and greenhouse gas emissions.

Hereinafter, embodiments of the present disclosure will be described in detail.

If there is an isomer of a compound represented by a formula used in the present disclosure, the compound represented by the formula includes the isomer.

As used herein, the term "X polymer" may refer to a polymer including an X compound and a derivative of the X compound. For example, the X compound may be included as a main repeating unit. For example, the X compound may be included as a portion of a copolymer. For example, a cellulose polymer may refer to a polymer including cellulose.

A "derivative of the X compound" is a compound that has been synthesized or created from X compound through a chemical reaction that alters the chemical structure of the X compound. The change of the chemical structure can occur in several ways, such as the addition, removal, substitution of certain atoms or functional groups within the molecule of X compound. The derivative of the X compound retains a core part of the molecular structure of the original compound that is X compound, but possesses new physical, chemical, and/or biological properties due to the modification of the chemical structure of X compound.

The conductive material dispersion liquid according to embodiments of the present disclosure includes a conductive material including carbon nanotubes. The conductive material dispersion liquid includes a first dispersant

including a cellulose polymer and a second dispersant including a polyethylene oxide polymer. Hence, according to embodiments of the present disclosure, the conductive material dispersion liquid includes a conductive material including carbon nanotubes, a first dispersant including a cellulose polymer and a second dispersant including a polyethylene oxide polymer.

The carbon nanotubes may refer to a polymer carbon allotrope formed by carbon atoms having an sp2 bonding structure and being connected to each other in a hexagonal honeycomb shape. The carbon nanotubes may have a cylinder shape with a nano-sized diameter. The size and the shape of the carbon nanotubes can be determined by applying Scanning Electron Microscope (SEM).

The carbon nanotubes have high electrical conductivity and mechanical strength. The carbon nanotubes may be positioned between electrode active materials, thereby preventing micropores between electrode active materials from being closed during the pressing and molding processes for forming the electrode. Therefore, the electrolyte may easily penetrate into the electrode, and an internal resistance of the electrode active material layer may be reduced.

In some embodiments, the carbon nanotubes may include one or more of single-walled carbon nanotubes (SWCNTs), double-walled carbon nanotubes (DWCNTs) and multi-walled carbon nanotubes (MWCNTs).

In one embodiment, the carbon nanotubes may include the single-walled carbon nanotubes. In one embodiment, the carbon nanotubes may consist of the single-walled carbon nanotubes.

The single-walled carbon nanotubes have a large area where they can be bonded with the first dispersant including a cellulose polymer to be described below and the second dispersant including a polyethylene oxide polymer, such that the dispersibility of the conductive material dispersion liquid may be further improved.

In one embodiment, the carbon nanotubes may have an average length of 0.1 μm to 500 μm, 0.1 μm to 100 μm, or 1 μm to 10 μm. The length of the carbon nanotube may be a length in a major axis of the carbon nanotube. In other words, the length of a carbon nanotube is the largest absolute value of lengths measurable in the longitudinal direction of the carbon nanotube. The average length may mean an average value of the lengths measured in the carbon nanotube powder. The average length may e.g., be determined by adding up the respective lengths of the major axis of a statistically sufficient number of carbon nanotubes, e.g., 50 pieces, and then dividing the obtained value by the number of the carbon nanotubes, e.g., by 50. The obtained value is the average length of the carbon nanotubes.

In some embodiments, the carbon nanotubes may have an outer diameter of 1 nm to 15 nm, 1 nm to 10 nm, 1 nm to 7 nm, 1.1 nm to 5 nm, 1.2 nm to 4 nm, 1.5 nm to 3 nm, 1.6 nm to 2.5 nm, or 1.8 nm to 2.1 nm.

In some embodiments, the carbon nanotubes may have an inner diameter of 0.1 nm to 5 nm, 0.3 nm to 4 nm, 0.5 nm to 3 nm, 0.8 nm to 2.5 nm, 1.0 nm to 2.2 nm, 1.1 nm to 2.0 nm, or 1.2 nm to 1.5 nm.

The outer diameter and inner diameter of the carbon nanotubes represent average values of the outer diameters and inner diameters measured in the carbon nanotube powder, respectively. The outer and the inner diameter of a carbon nanotube may be measured by applying a Scanning Electron Microscope (SEM). The average value of the outer diameters may e.g., be determined by adding up the respective outer diameters of a sufficient number of carbon nanotubes, e.g., 50 pieces, and then dividing the obtained value by the number of the carbon nanotubes, e.g., by 50. In a corresponding way, the average value of the inner diameter may be determined.

A bonding force of the carbon nanotubes having the length and diameter within the above range with the dispersants to be described below may be increased, such that the dispersibility of the conductive material dispersion liquid may be further improved.

According to exemplary embodiments, a content of the conductive material including carbon nanotubes may be 0.20% by weight ("wt%") or more, 0.22 wt% or more, 0.24 wt% or more, 0.25 wt% or more, 0.27 wt% or more, 0.28 wt% or more, 0.29 wt% or more, or 0.30 wt% or more based on a total weight of the conductive material dispersion liquid.

According to exemplary embodiments, the content of the conductive material including carbon nanotubes may be 8.0 wt% or less, 7.5 wt% or less, 7.2 wt% or less, 7.0 wt% or less, 6.8 wt% or less, 6.5 wt% or less, 6.2 wt% or less, 6.0 wt% or less, 5.5 wt% or less, or 5.0 wt% or less, based on the total weight of the conductive material dispersion liquid.

For example, the content of the conductive material including carbon nanotubes may be 0.2 wt% to 8.0 wt%, 0.22 wt% to 7.5 wt%, 0.24 wt% to 7.2 wt%, 0.25 wt% to 7.0 wt%, 0.28 wt% to 6.0 wt%, 0.29 wt% to 5.5 wt%, or 0.30 wt% to 5.0 wt% based on the total weight of the conductive material dispersion liquid. It is also possible that the content of the conductive material including the carbon nanotubes may be 0.30 wt% to 4.0 wt%, 0.3. wt% to 3.5 wt%, 0.30 wt% to 3.0 wt%, 0.30 wt% to 2.5 wt%, 0.30 wt% to 2.0 wt%, 0.30 wt% to 1.5 wt%, 0.30 wt% to 1.0 wt%, 0.30 wt% to 0.8 wt%, 0.30 wt% to 0.5 wt%, or 0.30 wt% to 0.45 wt%. It is also possible that the content of the conductive material including the carbon nanotubes may be 0.40 wt% based on a total weight of the conductive material dispersion liquid.

Within the above content range, the content of the electrode active material is increased, such that an energy density of the secondary battery may be increased, and improved electrical conductivity may be maintained.

In one embodiment, the conductive material may be included in the form of powder.

The carbon nanotubes have a high specific surface area and a long aspect ratio, and may have a strong cohesive force due to the binding energy of the surface and strong van der Waals attraction. Therefore, the carbon nanotubes may exist in a state of being aggregated with each other in a solvent, and the viscosity of the conductive material dispersion

liquid may be increased due to the low dispersibility of the carbon nanotubes.

However, according to exemplary embodiments, the conductive material dispersion liquid includes the cellulose polymer, such that the dispersibility of the carbon nanotubes may be enhanced.

According to exemplary embodiments, the first dispersant includes a cellulose polymer. According to a further exemplary embodiment, the first dispersant is a cellulose polymer.

The cellulose polymer may include a cellulose-derived unit. For example, the cellulose polymer may include carboxymethyl cellulose (CMC), hydroxyethyl cellulose, hydroxypropyl cellulose, methyl cellulose, diacetyl cellulose, carboxyethyl cellulose and the like.

For example, the cellulose polymer may absorb the conductive material including carbon nanotubes as a main dispersant, and disperse the conductive material by reducing a cohesive force between the conductive materials by an electrostatic repulsive force through a polar functional group of the cellulose polymer.

In one embodiment, the first dispersant may include carboxymethyl cellulose. In a further embodiment, the first dispersant is carboxymethyl cellulose.

A polymer chain of the first dispersant including the carboxymethyl cellulose may more efficiently absorb the carbon nanotubes through a hydrophobic bond.

According to exemplary embodiments, the first dispersant may have a weight average molecular weight (MW; indicated in Da) of 75,000 or more, 80,000 or more, 85,000 or more, 90,000 or more, 95,000 or more, or 100,000 or more.

According to exemplary embodiments, the first dispersant may have a weight average molecular weight (MW) of 600,000 or less, 400,000 or less, 390,000 or less, 380,000 or less, 370,000 or less, 360,000 or less, 350,000 or less, 340,000 or less, or 330,000 or less.

According to exemplary embodiment, the first dispersant may have a weight average molecular weight (MW) in a range between 100,000 and 400,000, or 100,000 and 350,000, or 100,000 and 300,000, or 150,000 and 300,000, or 200,000 and 300,000. In an exemplary embodiment, the first dispersant may have a weight average molecular weight in a range between 200,000 and 300,000. In an exemplary embodiment, the average molecular weight of the first dispersant is about 250,000.

In an exemplary embodiment, the first dispersant may have a weight average molecular weight in a range between 100,000 and 250,000.

For example, the weight average molecular weight may be a value calculated in terms of polystyrene based on measurement results of gel permeation chromatography (GPC). The weight average molecular weight may be measured according to the ASTM D6474 method.

According to exemplary embodiments, the first dispersant may have a viscosity of 100 cP or more, 200 cP or more, 300 cP or more, 400 cP or more, 500 cP or more, or 600 cP or more.

According to exemplary embodiments, the first dispersant may have a viscosity of 4,000 cP or less, 3,500 cP or less, 3,200 cP or less, 3,000 cP or less, 2,800 cP or less, or 2,500 cP or less.

For example, the first dispersant may have a viscosity of 100 cP to 4,000 cP, 200 cP to 3,500 cP, 300 cP to 3,200 cP, 400 cP to 3,000 cP, 500 cP to 2,800 cP, or 600 cP to 2,500 cP.

The viscosity may represent a value measured in an aqueous solution state. For example, a viscosity measured at a shear rate of 96.2 $s^{-1}$ of an aqueous solution including 2 wt% of the first dispersant based on the total weight of the aqueous solution may be included in the above range.

The polymer chain of the first dispersant having the weight average molecular weight and/or viscosity in the above range has high compatibility with the carbon nanotubes in terms of the diameter and length, such that the adsorption efficiency may be improved.

According to exemplary embodiments, the first dispersant may have a degree of substitution of 0.4 or more, 0.5 or more, 0.55 or more, 0.60 or more, 0.65 or more, 0.68 or more, or 0.70 or more.

According to exemplary embodiments, the first dispersant may have a degree of substitution of 1.0 or less, 0.98 or less, 0.96 or less, 0.94 or less, 0.92 or less, or 0.90 or less.

For example, the first dispersant may have a degree of substitution of 0.4 to 1.0, 0.5 to 1.0, 0.55 to 0.98, 0.60 to 0.96, 0.65 to 0.94, 0.68 to 0.92, or 0.70 to 0.90.

The term "degree of substitution (DS)" may mean a degree to which hydroxyl groups of glucose units of cellulose are substituted by an alkyl group, an acyl group and the like. For example, the degree of substitution may be calculated as an average value of the number of hydroxyl groups substituted by an alkyl group or an acyl group among three hydroxyl groups per glucose unit. For example, the degree of substitution may be measured according to the method known in the art.

According to exemplary embodiments, a content of the first dispersant may be 50 parts by weight ("wt parts") or more, 60 wt parts or more, 65 wt parts or more, 70 wt parts or more, 72 wt parts or more, or 75 wt parts or more based on 100 wt parts of the conductive material.

According to exemplary embodiments, the content of the first dispersant may be 400 wt parts or less, 380 wt parts or less, 350 wt parts or less, 330 wt parts or less, 320 wt parts or less, or 300 wt parts or less based on 100 wt parts of the

conductive material.

For example, the content of the first dispersant may be 50 wt parts to 400 wt parts, 60 wt parts to 380 wt parts, 65 wt parts to 350 wt parts, 70 wt parts to 330 wt parts, or 75 wt parts to 300 wt parts based on 100 wt parts of the conductive material.

Within the above range, by suppressing an increase in the viscosity, flowability of the conductive material dispersion liquid may be enhanced, and the dispersibility of the conductive material may be improved. Accordingly, a penetration rate of an electrolyte may be improved due to securing a space between the electrode active materials, thereby improving electrical conductivity characteristics of the secondary battery.

According to exemplary embodiments, the second dispersant includes a polyethylene oxide polymer.

The polyethylene oxide polymer may include a polyethylene oxide-derived unit. For example, the polyethylene oxide polymer may include a polymer and/or a copolymer including an ethylene oxide repeating unit as a portion thereof.

For example, the polyethylene oxide polymer serves as an auxiliary dispersant, and micelles due to the polyethylene oxide polymer may be formed on the surface of the carbon nanotubes dispersed by the cellulose polymer. Through the micelles, an intermolecular interaction including the carbon nanotubes may be reduced and steric hindrance may be increased, thereby stably maintaining the dispersed state.

According to exemplary embodiments, the second dispersant may include a polyethylene oxide, or a copolymer of polyethylene oxide and polypropylene oxide.

The polyethylene oxide may form a hydrogen bond with a solvent included in the dispersion liquid, thereby improving dispersion stability.

According to exemplary embodiments, the second dispersant may further include a repeating unit represented by Formula 1 below.

[Formula 1]

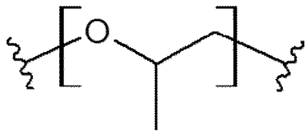

For example, the repeating unit represented by Formula 1 may form a block copolymer, a random copolymer, an alternating copolymer, a graft copolymer, etc., together with the ethylene oxide repeating unit.

According to exemplary embodiments, the repeating unit represented by Formula 1 may form a block copolymer together with the ethylene oxide repeating unit. The block copolymer may cause a predetermined interaction occurred between the conductive material and the solvent, thereby repetitive reproducibility may appear.

The copolymer of polyethylene oxide and polypropylene oxide may include a hydrophilic moiety and a hydrophobic moiety together to form a hydrophobic interaction with the conductive material and a hydrophilic interaction with the solvent. Accordingly, a distance between the conductive materials may be secured, thereby maintaining the dispersed state stably.

According to exemplary embodiments, the second dispersant may include an ethylene oxide repeating unit at an end portion thereof. Accordingly, binding with the solvent is possible, and thus stability in the solvent may be improved.

In one embodiment, the second dispersant may include a polymer represented by Formula 2 below.

[Formula 2]

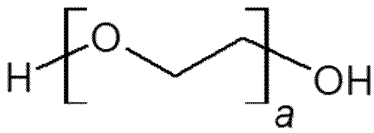

In Formula 2, a is an integer of 5 to 500.

In one embodiment, a may be 50 to 500, 80 to 450, or 100 to 400.

Within the above range, a predetermined chain length of the second dispersant may be secured, thereby suppressing the aggregation between the conductive materials.

In some embodiments, the second dispersant may include a polymer represented by Formula 3 below.

[Formula 3]

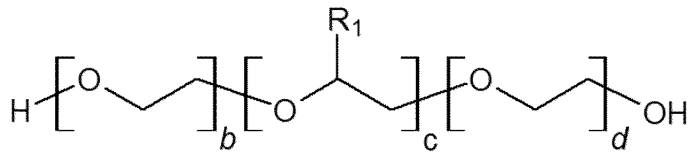

In Formula 3, $R_1$ is a $C_1$ to $C_5$ alkyl group or a $C_1$ to $C_5$ alkenyl group, and b, c and d are each an integer of 5 to 150.

In one embodiment, the second dispersant may include a polymer represented by Formula 3-1 below.

[Formula 3-1]

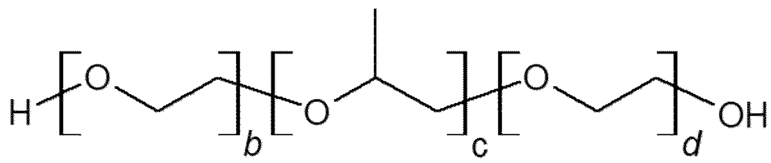

In Formula 3-1, b, c and d are each an integer of 5 to 150.

In one embodiment, b and d may each be an integer of 30 to 150, 50 to 140, or 60 to 130.

Within the above range, the length of the hydrophilic moiety at the end portion of the second dispersant may be maintained within a predetermined range, thereby further improving the dispersibility.

In one embodiment, c may be 20 to 150, 25 to 120, or 30 to 90. Within the above range, the distance between the hydrophobic moiety and the hydrophilic moiety may be secured, thereby improving the dispersion stability of the conductive material dispersion liquid.

In some embodiments, the second dispersant may include a polymer represented by Formula 4 below.

[Formula 4]

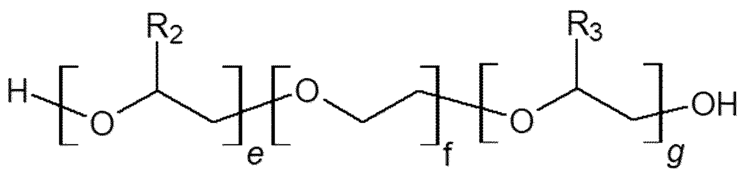

In Formula 4, $R_2$ and $R_3$ are each independently a $C_1$ to $C_5$ alkyl group or a $C_1$ to $C_5$ alkenyl group, and e, f and g are each an integer of 5 to 150.

In one embodiment, the second dispersant may include a polymer represented by Formula 4-1 or Formula 4-2 below.

[Formula 4-1]

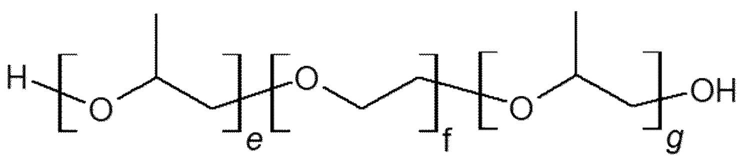

In Formula 4-1, e, f and g are each an integer of 5 to 150.

In one embodiment, e and g in Formula 4-1 may each be an integer of 20 to 150, 25 to 120, or 30 to 90.

In one embodiment, f in Formula 4-1 may be 30 to 150, 50 to 140, or 60 to 130.

Within the above range, the distance between the hydrophobic moiety and the hydrophilic moiety of the second dispersant may be secured, thereby improving the dispersion stability of the conductive material dispersion liquid.

In some embodiments, the second dispersant may include a polysorbate polymer.

For example, the polysorbate polymer may include polysorbate 20 (sorbitan monolaurate), polysorbate 21

(PEG-4 sorbitan monolaurate), polysorbate 40 (PEG-20 sorbitan monopalmitate), polysorbate 60 (PEG-20 sorbitan monostearate), polysorbate 61 (PEG-4 sorbitan monosterate), polysorbate 65 (PEG-20 sorbitan tristearate), polysorbate 80 (PEG-80 sorbitan monooleate) and the like.

According to exemplary embodiments, the second dispersant may have a weight average molecular weight (MW) of 400 or more, 500 or more, 700 or more, 1,000 or more, 1,500 or more, 2,000 or more, 3,000 or more, or 5,000 or more.

According to exemplary embodiments, the second dispersant may have a weight average molecular weight (MW) of 50,000 or less, 30,000 or less, 28,000 or less, 25,000 or less, 22,000 or less, or 20,000 or less, or 18,000 or less.

For example, the second dispersant may have a weight average molecular weight (MW) of 400 to 50,000, 500 to 30,000, 700 to 28,000, 1,000 to 25,000, 1,500 to 22,000, 2,000 to 20,000, or 5,000 to 18,000.

For example, the weight average molecular weight may be a value calculated in terms of polystyrene based on measurement results of gel permeation chromatography (GPC).

The second dispersant having the weight average molecular weight in the above range may be distributed between the first dispersant and the carbon nanotubes to form steric hinderance, thereby further improving the dispersion stability of the conductive material dispersion liquid.

According to exemplary embodiments, a content of the second dispersant may be 0.9wt parts or more, 10 wt parts or more, 11 wt parts or more, 11.5 wt parts or more, 12 wt parts or more, or 12.5 wt parts or more based on 100 wt parts of the conductive material.

According to exemplary embodiments, the content of the second dispersant may be 100 wt parts or less, 90 wt parts or less, 80 wt parts or less, 75 wt parts or less, 72 wt parts or less, or 70 wt parts or less based on 100 wt parts of the conductive material.

For example, the content of the second dispersant may be 0.9 wt parts to 100 wt parts, 10 wt parts to 100 wt parts, 11 wt parts to 90 wt parts, 11.5 wt parts to 80 wt parts, 12 wt parts to 75 wt parts, or 12.5 wt parts to 70 wt parts based on 100 wt parts of the conductive material.

Within the above range, the second dispersant may be evenly distributed, thereby further improving the dispersion stability due to steric hindrance. Accordingly, the storage stability of the conductive material dispersion liquid may be improved.

According to exemplary embodiments, a weight ratio of the second dispersant to the first dispersant may be 0.01 or more, 0.05 or more, 0.055 or more, 0.06 or more, 0.065 or more, 0.07 or more, 0.075 or more, or 0.08 or more.

According to exemplary embodiments, the weight ratio of the second dispersant to the first dispersant may be 0.50 or less, 0.45 or less, 0.42 or less, 0.40 or less, 0.38 or less, 0.37 or less, 0.36 or less, or 0.35 or less.

For example, the weight ratio of the second dispersant to the first dispersant may be 0.01 to 0.50, 0.05 to 0.50, 0.055 to 0.45, 0.06 to 0.42, 0.07 to 0.40, 0.075 to 0.37, or 0.08 to 0.35.

Within the above range, the dispersibility may be improved while suppressing an increase in the viscosity due to the first dispersant. The conductive material may have a further improved degree of dispersion.

According to exemplary embodiments, the conductive material dispersion liquid may include a solvent. For example, the solvent may include an aqueous solvent or a non-aqueous solvent.

According to exemplary embodiments, the solvent may include an aqueous solvent. For example, the aqueous solvent may include a polar aqueous solvent such as water, an acidic solution, or a basic solution.

The aqueous solvent may include water as a main component. For example, a content of water in the aqueous solvent may be 80 wt% or more, 90 wt% or more, or 95 wt% or more. The aqueous solvent may be substantially composed of water.

The aqueous solvent may interact with the second dispersant through a hydrogen bond, thereby improving stability in the solvent.

In exemplary embodiments, the conductive material dispersion liquid may be prepared by mixing the conductive material, the above-described first dispersant and the second dispersant in the solvent. For example, the conductive material, the first dispersant and the second dispersant may be added to the solvent, followed by performing rotation, vibration, sliding, rolling, lifting, ultrasonic treatment, etc., to prepare a mixture.

In one embodiment, a dispersion process may be additionally performed on the mixture. For example, the mixture may be uniformly mixed and dispersed through a mixer, a disperser, a high-pressure disperser, a nano high-pressure disperser, an ultrasonic disperser, etc.

In one embodiment, mixing and dispersion may be performed together. For example, the conductive material, the first dispersant and the second dispersant may be uniformly mixed and dispersed in the solvent.

In one embodiment, the first dispersant and the second dispersant may be sequentially introduced.

After the carbon nanotubes are adsorbed by the first dispersant, steric hindrance may be formed by the second dispersant, thereby more efficiently improving the dispersibility.

According to exemplary embodiments, the conductive material dispersion liquid may include particles dispersed by the above-described first dispersant and second dispersant.

According to exemplary embodiments, the dispersed particles may have a median particle diameter (D50) of 10 μm to 120 μm, 10 μm to 100 μm, 20 μm to 80 μm, 30 μm to 70 μm, or 40 μm to 60 μm.

The median particle diameter (D50) of the dispersed particles may represent an average particle diameter of the particles included in the conductive material dispersion liquid when preparing the same. For example, when the particles are prepared in the form of film for evaluating an electrode or electrode resistance, the average of the dispersed particles may be smaller than the particle diameter.

According to exemplary embodiments, the dispersed particles included in the electrode may have a median particle diameter (D50) of 0.1 μm or more, 0.5 μm or more, 0.8 μm or more, 1.0 μm or more, 1.2 μm or more, or 1.5 μm or more.

According to exemplary embodiments, the dispersed particles included in the electrode may have a median particle diameter (D50) of 5 μm or less, 4.8 μm or less, 4.5 μm or less, 4.2 μm or less, 4.0 μm or less, 3.8 μm or less, 3.6 μm or less, or 3.5 μm or less.

For example, the dispersed particles included in the electrode may have a median particle diameter (D50) of 0.1 μm to 5 μm, 0.5 μm to 4.8 μm, 0.8 μm to 4.5 μm, 1.0 μm to 3.8 μm, 1.2 μm to 3.6 μm, or 1.5 μm to 3.5 μm.

A conductive material dispersion liquid including particles having a median particle diameter in the above range may secure pores between electrode active materials to improve the penetration rate of the electrolyte.

The median particle diameter of the dispersed particles included in the electrode may be adjusted by the median particle diameter of the dispersed particles included in the conductive material dispersion liquid. For example, when the dispersed particles included in the conductive material dispersion liquid has a median particle diameter of 60 μm or less, the dispersed particles included in the electrode may have a median particle diameter of 3 μm or less.

The median particle diameter (D50) may represent a particle diameter at 50% and 99.9% points of the volume particle size distribution based on the volume particle size distribution derived by the laser diffraction method.

According to exemplary embodiments, the conductive material dispersion liquid may have a viscosity of 910 cP or less, 750 cP or less, 700 cP or less, 670 cP or less, 650 cP or less, 630 cP or less, 620 cP or less, or 600 cP or less.

A lower limit of the viscosity of the conductive material dispersion liquid is not limited, but may be 10 cP or more, 50 cP or more, 100 cP or more, 150 cP or more, or 200 cP or more, for example.

An electrode having a low surface resistance may be formed through an electrode slurry including the conductive material dispersion liquid having the viscosity in the above range.

The viscosity may be measured according to the method known in the art, and for example, may represent a value measured using a viscometer.

According to exemplary embodiments, the conductive material dispersion liquid may have a viscosity change rate of 15% or less, 12% or less, 10% or less, 8% or less, 6% or less, or 5% or less.

A lower limit of the viscosity change rate of the conductive material dispersion liquid is not limited, but may be 0.1% or more, 0.2% or more, 0.3% or more, 0.4% or more, or 0.5% or more, for example.

The viscosity change rate may represent a value calculated according to Equation 1 below.

Viscosity change rate (%) = [(Initial viscosity of conductive material dispersion liquid) - Viscosity of conductive material dispersion liquid after 1 week storage at high temperature (50°C)/Initial viscosity of conductive material dispersion liquid] × 100 [Equation 1]

The long-term storage property of the conductive material dispersion liquid having the viscosity change rate in the above range may be secured.

The electrode slurry according to embodiments of the present disclosure may include the above-described conductive material dispersion liquid.

For example, the electrode slurry may be prepared by mixing and stirring an electrode active material in a solvent, and introducing the above-described conductive material dispersion liquid therein. For example, the electrode slurry may be prepared by introducing and mixing an electrode active material into the conductive material dispersion liquid. For example, the electrode slurry may include 90 wt% to 97 wt% of an electrode active material, 0.1 wt% to 1 wt% of the conductive material dispersion liquid, and a binder as the balance based on a total weight of the electrode slurry. For example, a content of the binder may be 2.5 wt% to 9 wt%.

The solvent in the electrode slurry may include an aqueous solvent such as water, an aqueous hydrochloric acid solution, an aqueous sodium hydroxide solution, or further aqueous solvents exhibiting similar properties, or a non-aqueous solvent such as N-methyl-2-pyrrolidone (NMP), dimethylformamide, dimethylacetamide, N,N-dimethylaminopropylamine, ethylene oxide, tetrahydrofuran, or further non-aqueous solvents exhibiting similar properties.

The electrode active material may be a cathode active material or an anode active material.

Examples of the cathode active material may include at least one compound selected from a lithium iron phosphate compound, a lithium cobalt oxide, a lithium manganese oxide, a lithium nickel oxide or a lithium composite

oxide, etc. For example, the cathode active material may include a layered compound such as lithium cobalt oxide ($LiCoO_2$) or lithium nickel oxide ($LiNiO_2$), etc., or lithium manganese oxide such as $LiMnO_3$, $LiMn_2O_3$, and $LiMnO_2$, etc.; lithium copper oxide ($Li_2CuO_2$); vanadium oxide such as $LiV_3O_8$, $LiFe_3O_4$, $V_2O_5$ and $Cu_2VO_7$, etc.; and lithium iron phosphate oxide such as $LiFePO_4$, etc.

In some embodiments, the cathode active material may include a compound represented by Formula 5 below.

[Formula 5] $Li_aNi_bM_{1-b}O_2$

In Formula 5, a and b may satisfy $0.95 \leq a \leq 1.08$, $b \geq 0.5$, and M may be at least one element of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.

In one embodiment, the cathode active material includes nickel (Ni), and may further include at least one of cobalt (Co) or manganese (Mn). For example, a nickel-cobalt-manganese (NCM)-based lithium oxide may be used as the cathode active material.

For example, nickel (Ni) may be provided as a metal associated with the capacity of the lithium secondary battery. The higher the content of nickel, the better the capacity and output of the lithium secondary battery, but if the content of nickel is excessively increased, the lifespan of the battery may be decreased, and it may be disadvantageous in terms of mechanical and electrical stability.

In one embodiment, the conductivity or resistance of the lithium secondary battery may be improved by cobalt (Co), as well as the mechanical and electrical stabilities of the lithium secondary battery may be improved by manganese (Mn).

The chemical structure represented by Formula 5 shows a bonding relationship between elements included in the lattice structure or crystal structure of the cathode active material, and does not exclude other additional elements. For example, M may be provided as a main active element of the cathode active material. Here, it should be understood that Formula 5 is provided to express the bonding relationship between the main active elements, and is a formula encompassing introduction and substitution of the additional elements.

In one embodiment, the cathode active material may further include auxiliary elements which are added to the main active elements, thus to enhance chemical stability thereof or the crystal structure. The auxiliary element may be incorporated into the crystal structure together to form a bond, and it should be understood that this case is also included within the chemical structure represented by Formula 5.

The anode active material useable in the present disclosure may include any material known in the related art, so long as it can intercalate and deintercalate lithium ions, without particular limitation thereof. For example, carbon-based materials such as crystalline carbon, amorphous carbon, carbon composite, carbon fiber, etc.; a lithium alloy; silicon or tin may be used. An example of an anode active material is SiOx, ($0<x<2$)

Examples of the amorphous carbon may include hard carbon, cokes, mesocarbon microbead (MCMB) calcined at 1500°C or lower, mesophase pitch-based carbon fiber (MPCF) or the like. Examples of the crystalline carbon may include graphite-based carbon such as natural graphite, graphite cokes, graphite MCMB, graphite MPCF or the like. Other elements included in the lithium alloy may include, for example, aluminum, zinc, bismuth, cadmium, antimony, silicone, lead, tin, gallium, indium or the like.

In one embodiment, the electrode slurry may further include a binder.

The binder may include an aqueous binder such as styrene-butadiene rubber (SBR) or further aqueous binder exhibiting similar properties.; a non-aqueous binder such as vinylidene fluoride-hexafluoropropylene copolymer (PVDF-co-HFP), polyvinylidene fluoride (PVDF), polyacrylonitrile, polymethylmethacrylate, nitrile butadiene rubber, or further non-aqueous binder exhibiting similar properties.

In one embodiment, when the electrode slurry includes a cathode active material, the binder may include a PVDF-based binder. In one embodiment, when the electrode slurry includes an anode active material, the binder may include an aqueous binder, for example, for compatibility with a carbon-based active material.

In one embodiment, the electrode slurry may further include a thickener .

FIGS. 1 and 2 are a schematic plan view and a cross-sectional view illustrating a lithium secondary battery according to exemplary embodiments, respectively.

Referring to FIGS. 1 and 2, the lithium secondary battery may include a cathode 100 and an anode 130 disposed to face the cathode 100. One of the cathode 100 and the anode 130 may be an electrode for a lithium secondary battery including an electrode active material layer formed from the above-described electrode slurry, and the other may be a counter electrode.

The cathode 100 may include a cathode current collector 105 and a cathode active material layer 110 formed on at least one surface of the cathode current collector 105. For example, the cathode slurry may be applied to at least one surface of the cathode current collector 105, followed by drying and pressing the same to prepare the cathode 100.

The cathode current collector 105 may include stainless steel, nickel, aluminum, titanium or an alloy thereof. The cathode current collector 105 may also include aluminum or stainless steel subjected to surface treatment with carbon,

nickel, titanium or silver.

The anode 130 may include an anode current collector 125, and an anode active material layer 120 formed on at least one surface of the anode current collector 125.

The anode current collector 125 may include, for example, gold, stainless steel, nickel, aluminum, titanium, copper, or an alloy thereof, and may include, for example, copper or a copper alloy.

In one embodiment, the electrode for a lithium secondary battery may be a cathode, and the counter electrode may be an anode. In one embodiment, the electrode for a lithium secondary battery may be an anode, and the counter electrode may be a cathode.

In one embodiment, the counter electrode may include, as the conductive material, a carbon-based conductive material such as graphite, carbon black, graphene, carbon nanotubes, etc., and/or a metal-based conductive material including tin, tin oxide, titanium oxide, or a perovskite material such as $LaSrCoO_3$, and $LaSrMnO_3$.

In some embodiments, a separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane may include a nonwoven fabric made of glass fiber having a high melting point, polyethylene terephthalate fiber or the like.

According to exemplary embodiments, the cathode 100, the anode 130 and the separation membrane 140 may be repeatedly disposed to form an electrode assembly 150. In some embodiments, the electrode assembly 150 may be of a winding type, a stacking type, a z-folding type, or a stack-folding type electrode assembly.

The electrode assembly 150 may be housed in a case 160 to define a lithium secondary battery. The lithium secondary battery may be manufactured, for example, in a cylindrical shape using a can, a square shape, a pouch type or a coin shape.

Electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

According to exemplary embodiments, the electrode assembly 150 may be housed in the case 160 together with the electrolyte. A non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulforane, γ-butyrolactone, propylene sulfite, tetrahydrofurane, and the like may be used. These compounds may be used alone or in combination of two or more thereof.

The embodiments of the present disclosure described above include the following aspects, and can be implemented through at least one of the following aspects.

According to the first aspect of a conductive material dispersion liquid, the conductive material dispersion liquid includes a conductive material including carbon nanotubes; a first dispersant including a cellulose polymer; and a second dispersant including a polyethylene oxide polymer.

In the first aspect, according to the second aspect of the conductive material dispersion liquid, a content of the conductive material may be 0.2% by weight to 8.0% by weight based on a total weight of the conductive material dispersion liquid.

In the first or the second aspect, according to the third aspect of the conductive material dispersion liquid, a content of the first dispersant may be 50% by weight to 400% by weight based on 100% by weight of the conductive material.

In anyone of the first to the third aspect, according to the fourth aspect of the conductive material dispersion liquid, a content of the second dispersant may be 10% by weight to 100% by weight based on 100% by weight of the conductive material.

In anyone of the first to the fourth aspect, according to the fifth aspect of the conductive material dispersion liquid, a weight ratio of the second dispersant to the first dispersant may be 0.05 to 0.5.

In anyone of the first to the fifth aspect, according to the sixth aspect of the conductive material dispersion liquid, the first dispersant may have a weight average molecular weight (MW) of 75,000 to 400,000.

In anyone of the first to the sixth aspect, according to the seventh aspect of the conductive material dispersion liquid, an average value of the number of hydroxyl groups substituted by an alkyl group or an acyl group among three

hydroxyl groups per glucose unit of the cellulose polymer in the first dispersant may be 0.5 to 1.0.

In anyone of the first to the seventh aspect, according to the eighth aspect of the conductive material dispersion liquid, the second dispersant may include a polyethylene oxide, or a copolymer of polyethylene oxide and polypropylene oxide.

In anyone of the first to the eighth aspect, according to the ninth aspect of the conductive material dispersion liquid, the second dispersant may include an ethylene oxide repeating unit and a repeating unit represented by Formula 1 below:

[Formula 1]

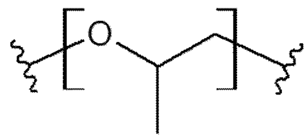

In anyone of the first to the ninth aspect, according to the tenth aspect of the conductive material dispersion liquid, the second dispersant may include one or more of polymers represented by Formulas 2 to 4 below:

[Formula 2]

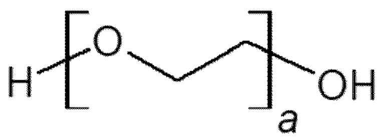

[Formula 3]

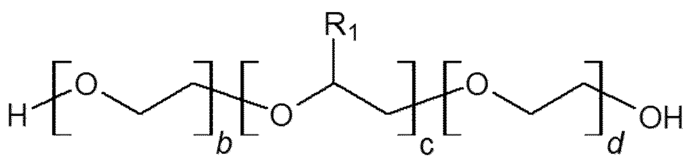

[Formula 4]

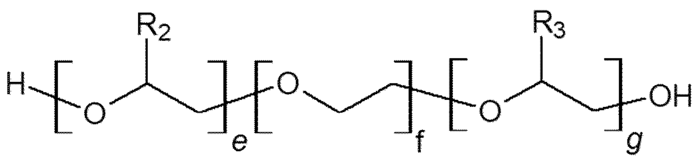

In Formula 2, a is an integer of 5 to 500. In Formula 3, $R_1$ is a $C_1$ to $C_5$ alkyl group or a $C_1$ to $C_5$ alkenyl group, and b, c and d are each an integer of 5 to 150. In Formula 4, $R_2$ and $R_3$ are each independently a $C_1$ to $C_5$ alkyl group or a $C_1$ to $C_5$ alkenyl group, and e, f and g are each an integer of 5 to 150.

In anyone of the first to the tenth aspect, according to the eleventh aspect of the conductive material dispersion liquid, the second dispersant may have a weight average molecular weight (MW) of 500 to 30,000.

In anyone of the first to the eleventh aspect, according to the twelfth aspect of the conductive material dispersion liquid, the conductive material dispersion liquid may have a viscosity change rate of 15% or less.

In anyone of the first to the twelfth aspect, according to the thirteenth aspect of the conductive material dispersion liquid, the conductive material dispersion liquid may further include an aqueous solvent.

According to the fourteenth aspect of an electrode slurry includes the conductive material dispersion liquid according to anyone of the first to the thirteenth aspect.

According to the fifteenth aspect of a lithium secondary battery includes the anode active material includes the

electrode slurry according to the fourteenth aspect.

Hereinafter, experimental examples including specific examples and comparative examples are proposed to facilitate understanding of the present disclosure.

## Examples and Comparative Examples

### (1) Preparation of conductive material dispersion liquid

(Preparation method A) Carbon nanotubes (SWCNT, length: 5 to 15 μm; outer diameter: 1 nm to 15 nm; inner diameter: 0.1 nm to 5 nm), carboxymethyl cellulose sodium salt (MW: 250,000 Da) as a first dispersant, and polyethylene oxide (PEO, MW: 6,000 Da) as a second dispersant were mixed in distilled water ($H_2O$) solvent in the contents described in Table 1 below. A lab-scale conductive material dispersion liquid was prepared by mixing them at a speed of 8,000 rpm for 3 hours using a mixer (Hight-shear Mixer).

(Preparation method B) A commercial conductive material dispersion liquid was prepared for a dispersant composition that showed a performance improvement effect in a lab-scale conductive material dispersion liquid. Specifically, carbon nanotubes (SWCNTs, length: 5 μm to 15 μm), carboxymethyl cellulose sodium salt (MW: 250,000 Da) as a first dispersant, and polyethylene oxide (PEO, MW: 6,000 Da) as a second dispersant were mixed in distilled water ($H_2O$) solvent in the contents described in Table 1 below. After mixing them at 3,000 rpm for 20 hours using a mixer (Reverse-scrapping Mixer), a dispersion liquid was prepared by mixing them at 60 Hz for 20 passes using a high-pressure homogenizer (Bead mill).

Conductive material dispersion liquids were prepared by changing the types and contents of the carbon nanotubes, the first dispersant and the second dispersant according to Table 1 below. When the first dispersant in Table 1 below included A-2, the conductive material dispersion liquid were prepared by mixing the components at a speed of 8,000 rpm for 3 hours.

The weight average molecular weight (MW) of each compound is measured through GPC analysis under the following conditions.

<GPC analysis condition>

i) Equipment: Agilent 1260 Infinity II (RI-detector, Agilent software)

ii) Developing Solvent: DI Water with NaCl

iii) Column: Agilent PL aquagel-OH+M+H

iv) Temperature: 40 °C, Flow rate: 1.0 mL/min, Injection amount: 100 mL

v) Reference material: PEG/PEO

[TABLE 1]

| Division | Carbon nanotube | First dispersant | | Second dispersant | |
|---|---|---|---|---|---|
| | Content (wt%) of the conductive material based on a total weight of the conductive material dispersion liquid | Type | Content (wt%) | Type | Content (wt%) |
| Example 1 | 0.4 | A-1 | 0.6 | B-1 | 0.1 |
| Example 2 | 0.4 | A-1 | 0.6 | B-1 | 0.2 |
| Example 3 | 0.4 | A-1 | 0.6 | B-1 | 0.05 |
| Example 4 | 0.4 | A-1 | 0.6 | B-1 | 0.01 |
| Example 5 | 0.4 | A-1 | 0.6 | B-2 | 0.1 |
| Example 6 | 0.4 | A-1 | 0.6 | B-3 | 0.1 |
| Example 7 | 0.4 | A-1 | 0.6 | B-4 | 0.1 |

(continued)

| Division | Carbon nanotube | First dispersant | | Second dispersant | |
|---|---|---|---|---|---|
| | Content (wt%) of the conductive material based on a total weight of the conductive material dispersion liquid | Type | Content (wt%) | Type | Content (wt%) |
| Example 8 | 0.4 | A-1 | 0.6 | B-4 | 0.05 |
| Example 9 | 0.4 | A-1 | 0.6 | B-4 | 0.01 |
| Example 10 | 0.4 | A-1 | 0.6 | B-5 | 0.1 |
| Example 11 | 0.4 | A-1 | 1.2 | B-1 | 0.1 |
| Example 12 | 0.4 | A-1 | 0.3 | B-1 | 0.1 |
| Example 13 | 0.4 | A-2 | 0.6 | B-1 | 0.1 |
| Example 14 | 0.4 | A-2 | 0.6 | B-4 | 0.1 |
| Example 15 | 0.4 | A-3 | 0.6 | B-1 | 0.1 |
| Example 16 | 0.4 | A-4 | 0.6 | B-1 | 0.1 |
| Example 17 | 0.4 | A-5 | 0.6 | B-1 | 0.1 |
| Comparative Example1 | 0.4 | A-1 | 0.6 | - | - |
| Comparative Example2 | 0.4 | A-1 | 0.4 | - | - |
| Comparative Example3 | 0.4 | A-2 | 0.6 | - | - |
| Comparative Example4 | 0.4 | A-1 | 0.6 | B-6 | 0.1 |
| Comparative Example5 | 0.4 | A-1 | 0.6 | B-7 | 0.1 |
| Comparative Example6 | 0.4 | - | - | B-1 | 0.6 |
| Comparative Example7 | 0.4 | - | - | B-4 | 0.6 |

The specific compounds in Table 1 above are as follows.

A-1: Carboxymethyl cellulose, MW: 250,000, degree of substitution: 0.7
A-2: Carboxymethyl cellulose, MW: 110,000, degree of substitution: 0.85
A-3: Carboxymethyl cellulose, MW: 600,000, degree of substitution: 0.7
A-4: Carboxymethyl cellulose, MW: 250,000, degree of substitution: 1.2
A-5: Carboxymethyl cellulose, MW: 250,000, degree of substitution: 0.4
B-1: Polyethylene oxide, MW: 6,000
B-2: Polyethylene oxide, MW: 400
B-3: Polyethylene oxide, MW: 50,000
B-4: Pluronic F-127, MW: 12,500
B-5: Pluronic 10R5, MW: 2,000
B-6: Sodium dodecylbenzene sulfonate (SDBS), MW: 348
B-7: Cetrimonium bromide (CTAB), MW: 365

**(2) Preparation of anode slurry and film for electrode resistance evaluation**

96.3 wt parts of an anode active material (SiOx, 0<x<2), 1.5 wt parts of carboxymethylcellulose as a first binder, and 2.0 wt parts of styrene-butadiene rubber as a second binder were added to a water ($H_2O$) solvent. These components were mixed at 1,000 rpm for 10 minutes using a mixer (Thinky, ARE-310). 0.25 wt parts of the conductive material dispersion liquids prepared in the examples and comparative examples was respectively added to a slurry including the anode active material and the binder. Thereafter, an anode active material slurry was obtained by mixing them at 1,000 rpm for 10 minutes using a mixer. A total solid content of the anode active material slurry was 90 wt% to 98 wt%.

The anode active material slurry was applied to a PET substrate (thickness: 50 μm) using an applicator. Thereafter, the substrate was dried at 100°C for 1 hour using an electric oven, and an anode film for measuring surface resistance having an average thickness of 100 μm to 130 μm (excluding the PET substrate thickness) was obtained.

## Experimental Example

### (1) Particle size analysis of particles in the conductive material dispersion liquid

Particle sizes of the particles included in the conductive material dispersion liquids prepared according to the examples and comparative examples were analyzed. Specifically, the conductive material dispersion liquid was diluted 2,000 times using an aqueous solution ($H_2O$). The particle size was calculated by measuring a difference in diffraction patterns according to the particle size for the diluted solution of conductive material dispersion liquid using a laser diffraction particle size measuring device (HORIBA, LA-950V2). A minimum particle size (Dmin) was measured as the smallest particle size in the measured volume-based particle size distribution curve, and D50 was measured by calculating the particle diameter at points where the volume fraction was 50% and 99.9%, and the particle size was evaluated according to the following standards.

<Standards for particle size evaluation>

◎: Less than 60 μm based on D50
◦: 60 μm or more and less than 80 μm based on D50
△: 80 μm or more and less than 120 μm based on D50
×: 120 μm or more based on D50

### (2) Measurement of viscosity of conductive material dispersion liquid

Viscosities of the conductive material dispersion liquids prepared according to the examples and comparative examples were measured. The viscosity was measured using a Rheometer viscometer (Antonparr equipment, Standard measuring system CC27/T200/SS Cylinder type, 25.0°C), and confirmed based on a shear rate of 96.2 $s^{-1}$.

### (3) Evaluation of electrode resistance

Electrode resistances of anodes were measured according to measurement equipment and conditions using the films for measuring electrode resistance prepared according to the examples and comparative examples.
Surface resistances were measured at six points of an anode film using equipment (Nitto Seiko Analytech, LORESTA-GX, MCP-T700), and an average value thereof was calculated. The electrode resistance was calculated by multiplying the measured surface resistance value by the thickness of the film.

### (4) Evaluation of storage stability

Storage stability was evaluated by calculating a change in Rheometer viscosity during the storage period through a high-temperature acceleration experiment of each of the conductive material dispersion liquids prepared in the examples and comparative examples.
The initial Rheometer viscosities of the conductive material dispersion liquids prepared in the examples and comparative examples were measured within 3 days after preparation.
The conductive material dispersion liquids prepared in the examples and comparative examples were stored at a high temperature (50°C) for one week, and then the viscosities were measured in the same manner as the initial viscosity measurement. A degree of change (viscosity change rate) between the initial viscosity and the viscosity measured after 1 week storage at high temperature was calculated, and the storage stability was evaluated according to the following standards.
The viscosity change rate was calculated as shown in Equation 1 below.

Viscosity change rate (%) = [(Initial viscosity of conductive material dispersion liquid) - Viscosity of conductive material dispersion liquid after 1 week storage at high temperature (50°C)/Initial viscosity of conductive material dispersion liquid] × 100 [Equation 1]

<Standards for storage stability evaluation>

◎: Viscosity change rate is 5% or less
◦: Viscosity change rate is greater than 5% and less than 15%
△: Viscosity change rate is greater than 15% and less than 30%
×: Viscosity change rate is greater than 30%

Measurement results of the particle size and viscosity of the particles in the conductive material dispersion liquid, and electrode resistance and storage stability of the anode slurry are shown in Table 2 below.

[TABLE 2]

| Laboratory-Scale | Preparation method | Particle size | Viscosity of dispersion liquid (cP) | Electrode resistance (Ω/cm) | Storage stability |
|---|---|---|---|---|---|
| Example 1 | A | ◎ | 580 | 1.1 | ◎ |
| Example 2 | A | ◎ | 550 | 1.5 | ◎ |
| Example 3 | A | ◎ | 680 | 1.0 | ◎ |
| Example 4 | A | △ | 750 | 0.85 | ○ |
| Example 5 | A | ○ | 630 | 1.1 | ○ |
| Example 6 | A | △ | 520 | 1.3 | ○ |
| Example 7 | A | ◎ | 590 | 1.1 | ◎ |
| Example 8 | A | ○ | 680 | 0.98 | ◎ |
| Example 9 | A | △ | 720 | 0.86 | △ |
| Example 10 | A | ◎ | 560 | 1.2 | ○ |
| Example 11 | A | ○ | 750 | 1.3 | ○ |
| Example 12 | A | ○ | 580 | 1.4 | ○ |
| Example 13 | A | ◎ | 470 | 1.1 | ◎ |
| Example 14 | A | ◎ | 460 | 1.1 | ◎ |
| Example 15 | A | △ | 910 | 1.6 | ◎ |
| Example 16 | A | ○ | 480 | 1.3 | △ |
| Example 17 | A | ○ | 810 | 1.3 | △ |
| Comparative Example 1 | A | △ | 820 | 0.75 | △ |
| Comparative Example 2 | A | △ | 760 | 0.73 | × |
| Comparative Example 3 | A | ◎ | 520 | 0.71 | × |
| Comparative Example 4 | A | × | 680 | 2.4 | × |
| Comparative Example 5 | A | × | 650 | 2.6 | × |
| Comparative Example 6 | A | ○ | 380 | 3.5 | △ |
| Comparative Example 7 | A | ○ | 400 | 3.8 | × |

[TABLE 3]

| Industrial-Scale | Preparation method | Particle size | Viscosity of dispersion liquid (cP) | Electrode resistance (Ω/cm) | Storage stability |
|---|---|---|---|---|---|
| Example 18 | B | 3 μm | 365 | 1.2 | ◎ |
| Comparative Example 8 | B | 15 μm | 770 | 1.4 | △ |

Upon comparing the Examples (Examples 1 to 17) of the present disclosure with the comparative examples

(Examples 1 to 7) in Table 2, it was confirmed that the particle size and viscosity of the particles in the conductive material dispersion liquid according to the examples were reduced, thereby improving the dispersibility. In addition, the viscosity change rate was reduced, thereby improving the storage stability, and the electrode resistance of the anode prepared of the anode slurry composition including the conductive material dispersion liquid was reduced.

According to Table 2, it was confirmed for the comparative examples that the particle size of the particles in the conductive material dispersion liquid was increased, the viscosity of the anode slurry composition was increased, and/or the conductive materials were aggregated. In addition, the storage stability was low due to the high viscosity change rate, and the electrode resistance of the anode prepared of the anode slurry composition including the conductive material dispersion liquid was increased.

In Table 3, the conductive material dispersion liquids in Example 18 had a low particle size, viscosity, and viscosity change rate, and the electrode resistance of the anode prepared therefrom was decreased. However, the conductive material dispersion liquids in Comparative Example 8 had a high particle size, viscosity, and viscosity change rate, and the electrode resistance of the anode prepared therefrom was increased. Accordingly, the commercial viability of the conductive material dispersion liquids according to the examples was confirmed.

In Example 4, where the content of the second dispersant was relatively low, the particle size was relatively increased, and the viscosity of the conductive material dispersion liquid was relatively increased.

In Example 6, where the molecular weight of the second dispersant was relatively high, the particle size was relatively increased and the electrode resistance was increased.

In Example 9, where a different type of second dispersant was used but the content thereof was relatively low, the particle size was relatively increased. In addition, the viscosity of the conductive material dispersion liquid was relatively increased and the storage stability was relatively decreased.

In Example 15, where the molecular weight of the first dispersant was relatively high, the particle size was relatively increased. In addition, the viscosity of the conductive material dispersion liquid was increased and the electrode resistance was increased.

In Example 16, where the first dispersant with a relatively high degree of substitution was used, the storage stability of the conductive material dispersion liquid was relatively decreased.

In Example 17, where the first dispersant with a relatively low degree of substitution was used, the viscosity of the conductive material dispersion liquid was increased and the storage stability was relatively decreased.

[Description of Reference Numerals]

100: Cathode
105: Cathode current collector
107: Cathode lead
110: Cathode active material layer
120: Anode active material layer
125: Anode current collector
127: Anode lead
130: Anode
140: Separation membrane
150: Electrode assembly
160: Case

## Claims

1. A conductive material dispersion liquid, comprising:

   a conductive material including carbon nanotubes;
   a first dispersant including a cellulose polymer; and
   a second dispersant including a polyethylene oxide polymer.

2. The conductive material dispersion liquid according to claim 1, wherein a content of the conductive material is 0.2% by weight to 8.0% by weight based on a total weight of the conductive material dispersion liquid.

3. The conductive material dispersion liquid according to claims 1 or 2, wherein a content of the first dispersant is 50% by weight to 400% by weight based on 100% by weight of the conductive material,

and/or
wherein a content of the second dispersant is 10% by weight to 100% by weight based on 100% by weight of the conductive material.

**4.** The conductive material dispersion liquid according to anyone of claims 1 to 3, wherein a weight ratio of the second dispersant to the first dispersant is 0.05 to 0.5.

**5.** The conductive material dispersion liquid according to anyone of claims 1 to 4, wherein the first dispersant has a weight average molecular weight (MW) of 75,000 to 400,000.

**6.** The conductive material dispersion liquid according to anyone of claims 1 to 5, wherein an average value of the number of hydroxyl groups substituted by an alkyl group or an acyl group among three hydroxyl groups per glucose unit of the cellulose polymer in the first dispersant is 0.5 to 1.0.

**7.** The conductive material dispersion liquid according to anyone of claims 1 to 6, wherein the second dispersant comprises a polyethylene oxide, or a copolymer of polyethylene oxide and polypropylene oxide, preferably wherein the second dispersant comprises an ethylene oxide repeating unit and a repeating unit represented by Formula 1 below:

[Formula 1]

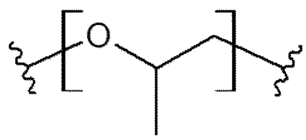

**8.** The conductive material dispersion liquid according to anyone of claims 1 to 7, wherein the second dispersant comprises one or more of polymers represented by Formulas 2 to 4 below:

[Formula 2]

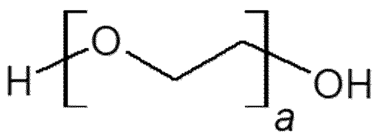

[Formula 3]

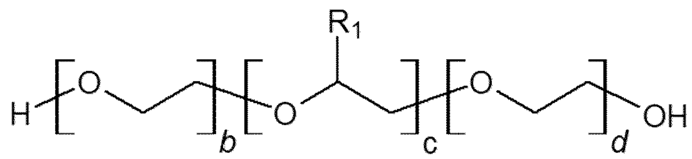

[Formula 4]

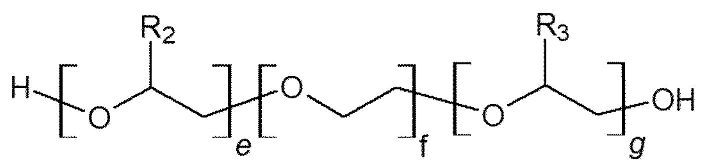

wherein in Formula 2, a is an integer of 5 to 500, in Formula 3, $R_1$ is a $C_1$ to $C_5$ alkyl group or a $C_1$ to $C_5$ alkenyl group, b, c

and d are each an integer of 5 to 150, and in Formula 4, $R_2$ and $R_3$ are each independently a $C_1$ to $C_5$ alkyl group or a $C_1$ to $C_5$ alkenyl group, and e, f and g are each an integer of 5 to 150.

**9.** The conductive material dispersion liquid according to anyone of claims 1 to 8, wherein the second dispersant has a weight average molecular weight (MW) of 500 to 30,000.

**10.** The conductive material dispersion liquid according to anyone of claims 1 to 9, wherein the conductive material dispersion liquid has a viscosity change rate of 15% or less.

**11.** The conductive material dispersion liquid according to anyone of claims 1 to 10, wherein carbon nanotubes include, optionally consist of, single-walled carbon nanotubes (SWCNTs), optionally wherein the carbon nanotubes have an average length of 0.1 μm to 500 μm or 1 μm to 10 μm, have an outer diameter of 1 nm to 15 nm or 1 nm to 10 nm, and/or have an inner diameter of 0.1 nm to 5 nm or 0.3 nm to 4 nm.

**12.** The conductive material dispersion liquid according to anyone of claims 1 to 11, further comprising an aqueous solvent.

**13.** An electrode slurry comprising the conductive material dispersion liquid according to anyone of claims 1 to 12.

**14.** Use of a conductive material dispersion liquid including a conductive material; a first dispersant including a cellulose polymer, and a second dispersant including a polyethylene oxide polymer for dispersing in the liquid micron-sized particles, such as having a median particle diameter (D50) of 100 μm or lower, and/or for dispersing in the liquid nano-sized particles, such as nanotubes,

optionally wherein the conductive material dispersion liquid is as defined in anyone of claims 1 to 12, preferably for producing an electrode and/or for producing a lithium secondary battery.

**15.** A lithium secondary battery comprising:

an electrode for a lithium secondary battery which comprises an electrode active material layer formed from the electrode slurry according to claim 13; and
a counter electrode disposed to face the electrode for a lithium secondary battery.

[FIG. 1]

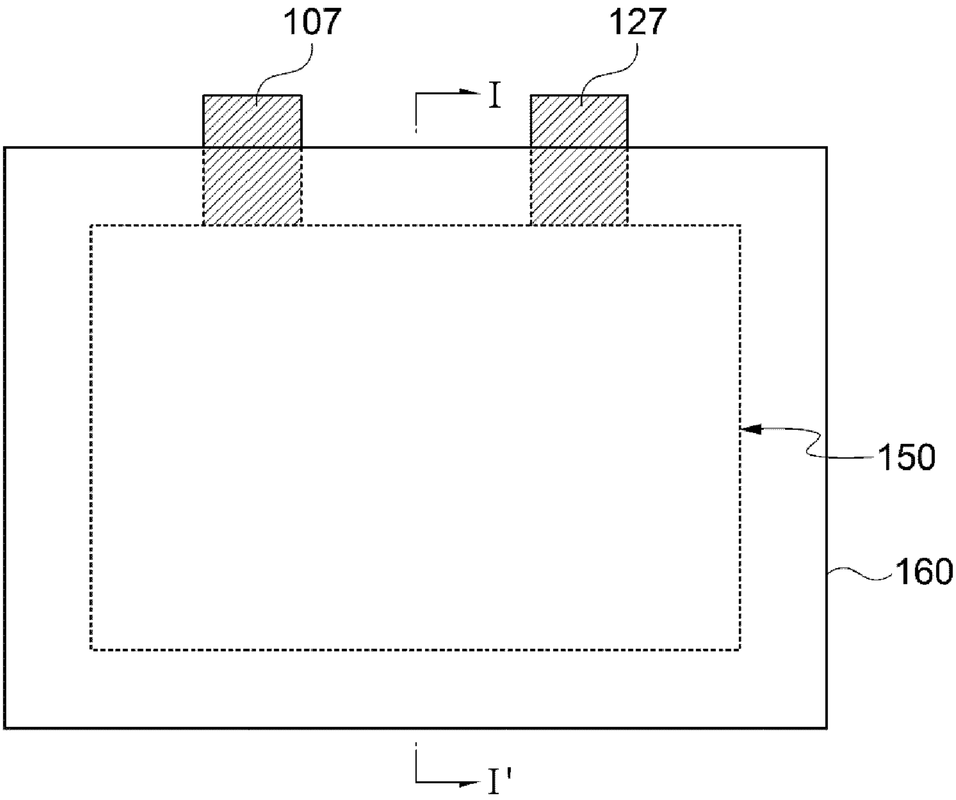


[FIG. 2]

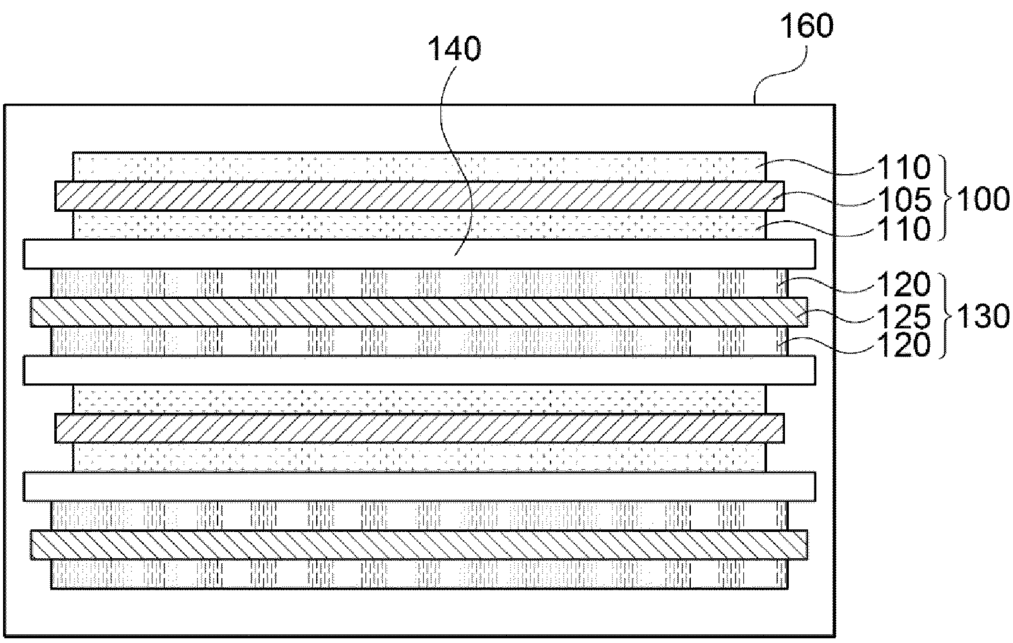

Europäisches Patentamt
European Patent Office
Office européen des brevets

# EUROPEAN SEARCH REPORT

Application Number
EP 25 20 1402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/155100 A1 (LG CHEMICAL LTD [KR]) 25 July 2024 (2024-07-25) * paragraphs [0006], [0015] - [0017], [0019], [0035], [0041], [0045], [0046], [0054], [0055], [0065], [0068], [0071] * * claims 1-14 * | 1-15 | INV. H01M4/62 C01B32/174 |
| A | EP 2 760 070 A1 (NISSAN CHEMICAL IND LTD [JP]; UNIV IWATE [JP]) 30 July 2014 (2014-07-30) * paragraphs [0009], [0051] * | 1-15 | |
| A | CN 110 085 866 A (HARBIN WANXIN GRAPHITE VALLEY TECH CO LTD) 2 August 2019 (2019-08-02) * paragraphs [0012], [0013] * | 1-15 | |
| A | CN 113 062 007 A (NINGBO INST MATERIALS TECH & ENG CAS) 2 July 2021 (2021-07-02) * claims 1-10 * | 1-15 | |

TECHNICAL FIELDS SEARCHED (IPC)

H01M
C01B

The present search report has been drawn up for all claims

1

| Place of search | Date of completion of the search | Examiner |
|---|---|---|
| The Hague | 2 February 2026 | Reich, Claus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 20 1402

This annex lists the patent family members relating to the patent documents cited in the above-mentioned European search report. The members are as contained in the European Patent Office EDP file on
The European Patent Office is in no way liable for these particulars which are merely given for the purpose of information.

02-02-2026

| Patent document cited in search report | Publication date | Patent family member(s) | Publication date |
|---|---|---|---|
| WO 2024155100 A1 | 25-07-2024 | CN 119866312 A | 22-04-2025 |
| | | EP 4570752 A1 | 18-06-2025 |
| | | JP 2025535883 A | 30-10-2025 |
| | | KR 20240115753 A | 26-07-2024 |
| | | US 20260028229 A1 | 29-01-2026 |
| | | WO 2024155100 A1 | 25-07-2024 |
| EP 2760070 A1 | 30-07-2014 | CN 103828104 A | 28-05-2014 |
| | | EP 2760070 A1 | 30-07-2014 |
| | | JP 6017432 B2 | 02-11-2016 |
| | | JP WO2013042720 A1 | 26-03-2015 |
| | | KR 20140082975 A | 03-07-2014 |
| | | US 2014248537 A1 | 04-09-2014 |
| | | WO 2013042720 A1 | 28-03-2013 |
| CN 110085866 A | 02-08-2019 | NONE | |
| CN 113062007 A | 02-07-2021 | NONE | |

EPO FORM P0459

For more details about this annex : see Official Journal of the European Patent Office, No. 12/82